# EUROPEAN PATENT APPLICATION

(11) **EP 4 286 966 A1**
(43) Date of publication of application: **06.12.2023**
(21) Application number: 22176954.0
(22) Date of filing: 02.06.2022
(51) Int. Cl.: G05B 19/042, G05B 23/02

(54) **ANALYZING INPUT DATA OF A RESPECTIVE DEVICE AND/OR CONTROLLING THE RESPECTIVE DEVICE METHOD AND SYSTEM**

(71) Applicant: Siemens Aktiengesellschaft, 80333 München (DE)
(72) Inventor: Alpire, Adam, 91052 Erlangen (DE); Bruckner, Johann, 90429 Nürnberg (DE); Khan, Rana Azeem, 90425 Nürnberg (DE); Lau, Tian Eu, 91052 Erlangen (DE); Nehrkorn, Johannes, 91096 Möhrendorf (DE); Rothering, Marcel, 90449 Nürnberg (DE)
(74) Representative: Siemens Patent Attorneys

(57) **Abstract**

For an improved analysis of a respective device (140) and/or control of the respective device (140), a computer-implemented method is suggested comprising:
- providing input data (120) from the respective device (140);
- providing a trained function (122) for processing the input data (120) to generate output data (124), the output data (124) being suitable for analyzing and/or controlling the respective device (140);
- determining if the input data (120) is suitable for processing with the trained function (122); and
- processing the input data (120) with the trained function (122) to generate the output data (124) only if the input data (120) is determined to be suitable for processing with the trained function (122).

## Description

### Technical field

The present disclosure is directed, in general, to automation or software management systems, in particular systems for analyzing input data of a respective device and/or controlling the respective device (collectively referred to herein as product systems).

### Background

Recently, trained functions, such as functions derived using artificial intelligence, machine learning models or the like, are increasingly used to analyze input data of a respective device and/or to control the respective device. The present invention generally relates to analyzing input data of a respective device and/or controlling the respective device using a trained function. Currently, there exist product systems and solutions which support analyzing input data of a respective device and/or controlling the respective device using a trained function. Such product systems may benefit from improvements.

### Summary

Variously disclosed embodiments comprise methods and computer systems that may be used to facilitate analyzing input data of a respective device and/or controlling the respective device.

According to a first aspect of the invention, a computer-implemented method of analyzing input data of a respective device and/or controlling the respective device may comprise:
- providing input data from the respective device;
- providing a trained function for processing the input data to generate output data, the output data being suitable for analyzing and/or controlling the respective device;
- determining if the input data is suitable for processing with the trained function; and
- processing the input data with the trained function to generate the output data only if the input data is determined to be suitable for processing with the trained function.

According to a second aspect of the invention, a computer system may be arranged and configured to execute the steps of the computer-implemented method according to the first aspect of the invention.

According to a third aspect of the invention, a computer program product may comprise computer program code which, when executed by the computer system according to the second aspect of the invention, causes the computer system to carry out the method according to the first aspect of the invention.

According to a fourth aspect of the invention, a computer-readable medium may comprise the computer program product according to the third aspect of the invention. By way of example, the described computer-readable medium may be non-transitory and may further be a software component on a storage device.

### Brief description of the drawings

- Fig. 1: illustrate a functional block diagram of an example system that facilitates analyzing input data of a respective device and/or controlling the respective device, in a product system, respectively.
- Fig. 2: illustrates a flow diagram of another methodology of analyzing input data of a respective device.
- Figs. 3-5: illustrate a functional block diagram of a further example system that facilitates analyzing input data of a respective device and/or controlling the respective device, in a product system, respectively.
- Fig. 6: illustrates an example message in the context of facilitated analysis of input data of a respective device and/or control of the respective device, in a product system.
- Figs. 7&8: illustrate a flow diagram of an example methodology that facilitates analyzing input data of a respective device and/or controlling the respective device, in a product system, respectively.
- Fig. 9: illustrates a block diagram of a data processing system in which an embodiment can be implemented.

### Detailed description

Various technologies that pertain to systems and methods for analyzing input data of a respective device and/or controlling the respective device, in a product system will now be described with reference to the drawings, where like reference numerals represent like elements throughout. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements.

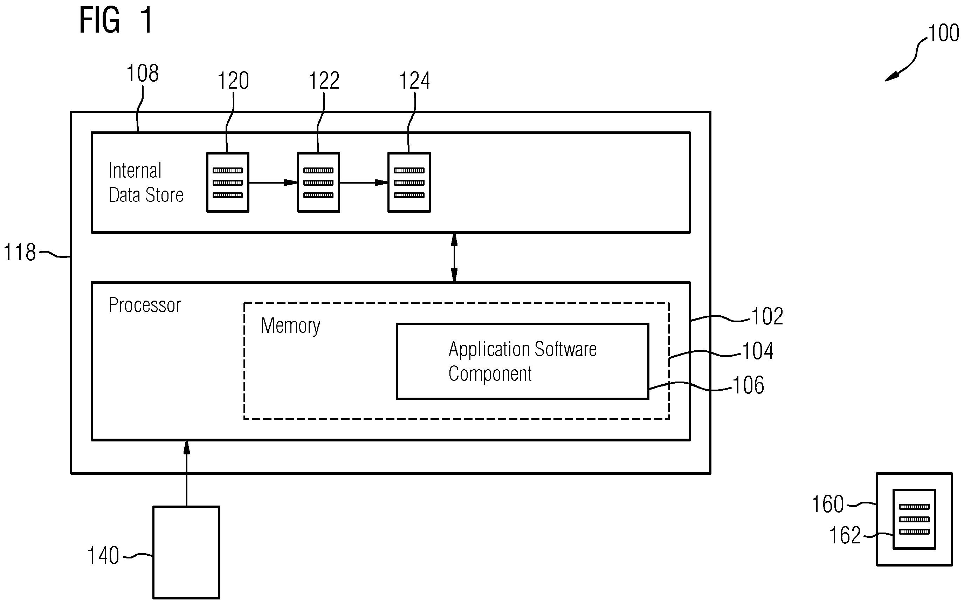

With reference to Fig. 1, a functional block diagram of an example data processing system 100 is illustrated that facilitates analyzing input data 120 of a respective device 140 and/or controlling the respective device 140. The data processing system 100 may, in some examples, comprise a computation device 118 or more generally a computer system allowing the analysis of input data 120 of a respective device 140 and/or the control of the respective device 140 by providing corresponding functionalities, e.g., to a user. The computation device 118 may comprise at least one processor 102 that is configured to execute at least one application software component 106 from a memory 104 accessed by the processor 102. The application software component 106 may be configured (i.e., programmed) to cause the processor 102 to carry out various acts and functions described herein. For example, the described application software component 106 may include and/or correspond to one or more components of an analysis and/or a control software application that may be configured to generate and store output data 124 in a data store 108 such as a memory or a database.

By way of example, the processing system 100 or optionally the computation device 118 may include at least one display device 112 (such as a display screen) and optionally at least one input device 110. The described processor 102 may be configured to generate a graphical user interface (GUI) 114 through the display device 112. Such a GUI may include GUI elements such as buttons, links, search boxes, lists, text boxes, images, scroll bars) usable by a user to provide inputs through the input device 110 that may support or cause analyzing input data 120 of the respective device 140 and/or controlling the respective device 140.

In some examples, the data processing system 100 may be used in the context of the production of printed circuit boards (PCBs) which are typically the main parts of many automation products. Such automation products can control machine tools, entire production lines, production processes and more. Manufacturing of PCBs often happens in highly automated production lines which include quality testing on multiple steps. Test equipment may be highly standardized and according tests may be performed at similar production steps across multiple production lines and factories. To ensure high quality of PCBs and subsequently products, test equipment may be tuned to be very sensitive to potential errors of PCBs. To reduce the number of pseudo errors or false calls of the test equipment ("false positives"), trained functions 122, such as machine learning models (ML models), may reevaluate test equipment data when the test equipment reports failures. Trained functions 122 may, in some PCB production examples, reduce the pseudo error rate by up to 50%, e.g., based on training of historical data, while keeping the slip rate ("false negatives") low. Any remaining PCB boards may need to be checked manually and potentially reworked.

Here, the results of the trained functions 122 or the ML model may be an integral part of the production. Prediction results may be produced synchronously with the production tact, i.e., every time the test equipment reports a failure, the trained functions 122 may need to provide a prediction result reliably with the smallest delay possible. To achieve this, trained functions 122 may be deployed on industrial PCs (IPCs) which may be physically and network-wise close to the test equipment to reduce any potential delay. Hereby, the computation device 118 may correspond to the industrial PC and the device 140 may correspond to the PCB production line or the test equipment which may be comprised by the PCB production line. The computation device 118, e.g., the industrial PC, may be resource-constraint in terms of CPU power, memory, storage and chosen in a cost-optimizing way to allow them to execute the trained function 122 or the ML model in the targeted time.

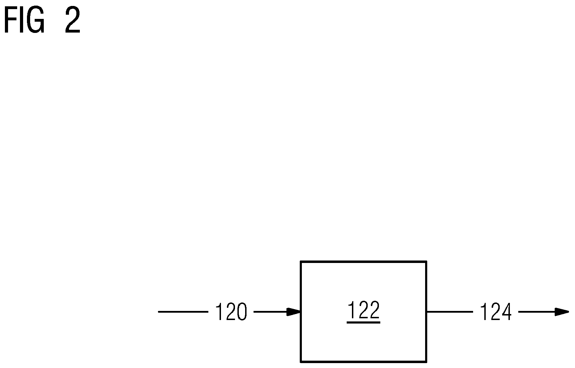

A typical data flow for a ML inference pipeline is shown in Fig. 2. A ML model or trained function 122 receives tabular input data 120, typically consisting of a unique identifier, measurements which are used within the model ("features") and additional metadata not used for prediction. The ML model or trained function 122 consumes the input data 120 and performs a classification between pseudo errors and real errors, whereby the classification is the output data 124 of the trained function 122. A pseudo error result may overwrite the result of the test equipment, and the PCB board is further processed as usual. Confirmation of a real error results in diverting the PCB board in the production flow to a manual rework station.

It should be appreciated that, in some examples, some factors may make it impossible to make a prediction, e.g., processing the input data 120 with the trained function 122 to generate reliable and trustworthy output data 124. Such factors may comprise missing measurements ("features"). For example, upstream adjustments to the test equipment can result in missing features within the input data, e.g., instead of 10 features, the ML model only receives 9. Further, such factors may comprise changed data types of features. E.g., upstream adjustments to the test equipment or connectors to the IPC can result in changes of the data types of the input data 120, e.g., a decimal separator can change from '.' to ','. It should further be appreciated that, in further examples, some factors may reduce the reliability of the ML model prediction, e.g., the output data 124 of the trained function 122. Such factors may comprise values outside known boundaries. By way of example, different components on PCB boards can result in measurements of the test equipment outside the known boundaries of the initial training data set of the ML model or trained function 122. The behavior of the ML model or trained function 122 with respect to this data may be unknown. Further, such factors may comprise a changed precision level. For example, upstream adjustments might lead to a change in the number of significant digits for the model input features, e.g., for feature electric current, the feature value 1.26 mA might change to 1.3 mA, i.e., there is a decrease in precision, whereby the behavior of the ML model or trained function 122 with respect to these changes may be unknown.

In the light of the above explanations, it should be appreciated that it can be very difficult to derive reliable and trustworthy output data 124 from input data 120 through a trained function 122. Additional challenges may comprise comparably small available processing resources or comparably short acceptable processing times for deriving the output data 124 from the input data 120 through the trained function 122 which may make deriving reliable and trustworthy output data 124 from input data 120 through a trained function 122 even more difficult.

To enable the enhanced analysis of input data 120 of a respective device 140 and/or control of the respective device 140, the application software component 106 and/or the processor 102 may, in some examples, be configured to provide input data 120 from the respective device 140.

By way of example, the input data 120 may comprise an incoming stream of data messages. The input data 120 or the data messages may, e.g., comprise measured, derived or simulated sensor data, e.g., physical quantities, such as a temperature, a pressure, an electric current, and electric voltage, a distance, a speed or velocity, an acceleration, a flow rate, electromagnetic radiation comprising visible light, or any other physical quantity. In some examples, the input data 120 or the data messages may, e.g., comprise measured, derived or simulated chemical quantities, such as acidity, a concentration of a given substance in a mixture of substances, and so on. The respective input data 120 may, e.g., characterize the respective device 140 or the status in which the respective device 140 is. In some examples, the respective input data 120 may characterize a machining or production step which is carried out or monitored by the respective device 140.

The respective device 140 may, in some examples, may be or comprise a sensor, an actuator, such as an electric motor, a valve or a robot, and inverter supplying an electric motor, a gear box, a programmable logic controller (PLC), a communication gateway, and/or other parts component relating to industrial automation products and industrial automation in general. The respective device 140 may be part of a complex production line or production plant, e.g., a bottle filing machine, conveyor, welding machine, welding robot, or the above-described PCB production line, etc. In further examples, there may be input data 120 relating to a plurality of such devices 140. Further, by way of example, the respective device 140 may comprise or be part of an IT system or a manufacturing operation management (MOM) system, a manufacturing execution system (MES), and enterprise resource planning (ERP) system, a supervisory control and data acquisition (SCADA) system, or any combination thereof.

The input data 120 may, by way of example, be stored in the data store 108 of the computing device 118. Further, the respective device 140 may, e.g., communicatively be coupled with the computing device 118, e.g., using a wired or wireless data connection to enable the transmission of the input data 120 from the respective device 140 to the computing device 118.

By way of example, the application software component 106 and/or the processor 102 may further be configured to provide a trained function 122 for processing the input data 120 to generate output data 124, the output data 124 being suitable for analyzing and/or controlling the respective device 140.

A trained function 122 may, e.g., be understood to be or comprise a machine learning algorithm, a deep learning model, an artificial neural network or more generally an artificial intelligence-based function. The trained function 122 may generally receive input data 120 which is then processed using the trained function 122 to generate output data 124. It should be appreciated that in some examples, the trained function 122 may be used for pattern recognition, data mining, image recognition, speech recognition, etc., and may particularly be useful for processing large amounts of data.

The input data 120 may be used to generate output data 124 by applying the trained function 122 to the input data 120. The trained function 122 may, e.g., correlate the input data 120 to the output data 124. The output data 124 may be used to analyze or monitor the respective device 140, e.g., to indicate whether the respective device 140 is working properly or the respective device 140 is monitoring a production step which is executed properly. In some examples, the output data 124 may indicate that the respective device 140 is damaged or that there may be problems with the production step which is monitored by the respective device 140. In other examples, the output data 124 may be used to operate or control the respective device 140, e.g., by implementing a feedback loop or a control loop using the input data 120, analyzing the input data 120 by applying the trained function 122 and generating the output data 124, and controlling or operating the respective device 140 based on the received input data 120 and the generated output data 124. In some examples, the respective device 140 may be a valve in a process automation plant, wherein the input data 120 comprises data on a flow rate which may then be analyzed with the trained function 122 to generate the output data 124, wherein the output data 124 comprises one or more target parameters for the operation of the valve, e.g., a target flow rate or target position of the valve.

The trained function 122 may, by way of example, be stored in the data store 108 of the computing device 118.

In further examples, the application software component 106 and/or the processor 102 may further be configured to determine if the input data 120 is suitable for processing with the trained function 122.

By way of example, the input data 120 may be determined to be suitable for processing with the trained function 122 if the input data 120 has a data format which is compatible with the trained function 122. For example, the trained function 122 may accept only input data 120 of a certain data format with which the input data 120 needs to comply. In some examples, the input data 120 may be determined to be suitable for processing with the trained function 122 if the values of the input data 120 are within a range of values for which the trained function 122 may provide meaningful output data 124. For example, the trained function 122 may only provide meaningful output data 124 if the input data 120 comprises positive values, e.g., of an electric current, whereas the trained function 122 may not provide meaningful output data 124 if the input data 120 comprises negative values, e.g., of the electric current.

Conversely, the input data 120 may be determined to be not suitable for processing with the trained function 122 if the input data 120 has a data format which is incompatible with the trained function 122 or if the values of the input data 120 are outside a range of values for which the trained function 122 may provide meaningful output data 124.

It should be appreciated, that in some examples, the application software component 106 and/or the processor 102 may further be configured to process the input data 120 with the trained function 122 to generate the output data 124 only if the input data 120 is determined to be suitable for processing with the trained function 122.

Processing only suitable input data 120 with the trained function 122 may considerably increase the reliability and trustworthiness of the generated output data 124. This may, e.g., be achieved by avoiding processing unsuitable input data 120 with the trained function 122 since processing unsuitable input data 120 with the trained function may generate unreliable and untrustworthy output data 124.

In some examples, the steps of determining if the input data 120 is suitable for processing with the trained function 122 and of processing only suitable input data 120 with the trained function 122 to generate the output data 124 may be considered as a module or component which may be understood as a "model defender" which may be added to the ML inference pipeline. The model defender may, e.g., evaluate input data 120 to the trained function 122 to assess its validity or suitability for the specific trained function 122 at hand. For example, for each input data sample from the respective device 140 a check may be performed based on specific methods or criteria to determine the suitability of the input data and may decide whether the input data 120 should be forwarded to the trained function 122 for generating output data 124 or, alternatively, the trained function 122 should not make a prediction based on this data sample. Further, an alternative data stream path may be opened which bypasses the trained function 122.

In some examples, the application software component 106 and/or the processor 102 may further be configured to providing at least one suitability criterion 126 for the input data 120, the respective suitability criterion 126 comprising at least one of an input data type, an input data precision value, at least one input data value boundary, an input data feature type, an input data feature number, an input data schema type, an input data category, or any combination thereof; to determine the input data 120 to be not suitable for processing with the trained function 122 if the input data 120 does not comply with the respective suitability criterion 126 and/or to determine the input data 120 to be suitable for processing with the trained function 122 if the input data 120 complies with the respective suitability criterion 126.

By way of example, the input data type may be a data type, such as an integer, a float, or a string, list, array, etc. or a combination thereof. Further, for the input data type float, the input data precision value may, e.g., be characterized by the number of significant digits or the data format single precision, double precision, quadruple precision, etc. In some examples, the number of significant digits of numerical features of new incoming input data 120 may be checked against a derived precision level from historical data. The input data value boundary may, e.g., define an upper and/or a lower boundary value or a range of values. Especially for numerical data types allowed boundaries may, e.g., be defined from historical data which in the simplest way comprise allowed upper and lower boundaries for the specific feature, such as a physical quantity comprised by the input data 120.

By way of example, if the input data 120 is related to an electric current, the suitability criterion 126 may comprise the data type "float" with the input data precision value "three significant digits" and the input data value boundaries "greater than 1.25" and "smaller than 5.20", hereby defining a range of suitable electric currents from 1.25 A to 5.20 A.

Further, the input data feature type may characterize one or more of the above-mentioned measured, derived or simulated physical or chemical quantity of the input data 120 (preferably in SI units) or the status in which the respective device 140 is. The input data feature number may, by way of example, characterize the number of different features, such as physical or chemical quantities of the input data 120. The input data schema type may, e.g., comprise the number of measurements, the number of meta data fields, a unique identifier field, and optionally the data type within each of the data fields, e.g., float, string, etc. The input data category may, by way of example, comprise an expected set, such as an expected component product type from which the input data originates or to which the input data 120 is in relation with. In some examples, the input data feature type, the input data feature number, the input data schema type, and/or the input data category may be derived from the historical data.

By way of example, if the input data 120 is related to an electric current and a related UV exposure during the PCB production, the suitability criterion 126 may comprise the input data feature types "electric current in Amperes" and "luminous flux in lumen", the input data feature number may be two (namely, "electric current in Amperes" and "luminous flux in lumen"), the input data schema type may be ten measurements per second or an average per second, and the input data category may be the related UV lamp.

In further examples, the respective suitability criterion 126 may describe an expected input data profile, wherein this expected input data profile may be or comprise one or more of the above-described items, such as an expected minimum, an expected maximum, an expected type and/or an expected precision of the input data 120, respectively.

The respective suitability criterion 126 may, by way of example, be stored in the data store 108 of the computing device 118.

Using one or more of the described suitability criteria 126 for the input data 120, the input data 120 may be assessed to determine whether the input data 120 is suitable or not suitable for processing with the trained function 122. If there is more than one suitability criterion 126, the input data 120 may, in some examples, only be determined to be suitable if the input data 120 complies with all the suitability criteria 126.

By way of example, the at least one suitability criterion 126 may comprise a warning criterion and an alarm criterion, wherein the application software component 106 and/or the processor 102 may further be configured to determine the input data 120 to be not suitable for processing with the trained function 122 if the input data 120 does not comply with the alarm criterion; and to determine the input data 120 to be suitable for processing with the trained function 122 if the input data 120 does not comply with the warning criterion and if the input data 120 complies with the alarm criterion.

The warning criterion and the alarm criterion may, in some examples, be understood as more fine-grained suitability criteria 126. Hereby the alarm criterion is more stringent and causes the input data 120 to be determined to be not suitable for processing with the trained function 122 if the input data 120 does not comply with the alarm criterion. The warning criterion, however, is less stringent and the input data 120 still may be determined to be suitable for processing with the trained function 122 if the input data does comply with the alarm criterion but does not comply with the warning criterion.

For example, if there is more than one suitability criterion 126, the alarm criterion may be that the input data 120 does not comply with two of these suitability criteria 126, whereas the warning criterion may be that the input data 120 does not comply with one of these suitability criteria 126. In further examples, there may be more important and less important suitability criteria 126. A more important suitability criterion 126 may, e.g., immediately negatively affect the quality of a product which is produced with the help of the respective device 140. Further, a more important suitability criterion 126 may, e.g., relate to environmental, health or safety topics related to the respective device 140, such as causing a fire or a potential injury of the production staff. Less important suitability criterion 126 may, e.g., relate to long-term effects, such as increased wear of the respective device 140 which may require earlier maintenance, repair or replacement than normal. In some examples, the alarm criterion may relate to the more important suitability criteria 126, whereas the warning criterion may relate to the less important suitability criteria 126.

It should be appreciated, that in some examples, if the input data 120 does not comply with the respective suitability criterion 126, the application software component 106 and/or the processor 102 may further be configured to provide at least one curable noncompliance item relating to the respective suitability criterion 126; and to amend the input data 120 such that the input data 120 complies with the respective suitability criterion 126, if the input data 120 does not comply with the respective curable noncompliance item relating to the respective suitability criterion 126.

In some examples, a curable noncompliance item may relate to the above-mentioned input data precision value, whereby input data 120 with a higher input data precision value than expected may be amended to a lower input data precision value which corresponds to the expected input data precision value. Such scenarios may occur, e.g., if the respective device 140 is replaced with a more performant respective device 140 which is able to provide input data 120 with a higher precision. The explained amendment of the input data 120 to a lower, but expected input data precision value may, e.g., have the additional benefit that big data volumes may be reduced to only required data volumes which may also speed up the processing of the input data 120 with the trained function 122.

In further examples, if only one or a few piece(s) of input data 120 is/are missing, this may still be acceptable so that the above-mentioned input data feature number may also constitute a curable noncompliance item, e.g., if the actual the expected input data feature number differ by one or only a few. In such cases, the input data 120 may be completed by substituting the missing piece(s) of input data 120 with a default value, e.g., a recent average of the now missing feature or the average of the features of the 10 or 100 preceding pieces of input data 120.

In some examples, the input data may comprise more features than expected, e.g., if the respective device 140 is replaced with a more performant respective device 140 which is able to provide at least one additional feature in the input data 120. Since the trained function 122 may, in some examples, not use the respective additional feature of the input data 120 to generate meaningful output 124, amending the input data 120 by omitting the respective additional feature may keep the analysis of the input data 120 or the control of the respective device 140 operational and reliable.

In further examples, the input data 120 may accidentally comprise the correct information, but in a wrong data format, e.g., as a string instead of a float format. Accordingly, the above-mentioned input data type may also constitute a curable noncompliance item. Amending the input data 120 by changing the input data type to the expected and accepted input data type may therefore, in some examples, keep the analysis of the input data 120 or the control of the respective device 140 operational and reliable.

It should also be appreciated that for the respective curable noncompliance item, the required amendments may be determined beforehand and may be provided to amend the input data 120 such that the input data 120 complies with the respective suitability criterion 126.

In further examples, if the input data 120 does not comply with the respective suitability criterion 126, the application software component 106 and/or the processor 102 may further be configured to generate a respective message 128 indicating that the input data 120 does not comply with the respective suitability criterion 126, the respective message 128 comprising information on the respective suitability criterion 126 with which the input data 120 does not comply with; and to provide the generated respective message 128 to a user or an operator of the respective device 140.

Especially since the respective message 128 may also comprise information on the respective suitability criterion 126 with which the input data 120 does not comply with, e.g., not only a data scientist, but also a test engineer or an operator of the respective device 140 or a plant comprising the respective device 140 may be able to understand the underlying problem leading to the noncompliance of the respective suitability criterion 126. In some examples, the respective message 128 including the respective suitability criterion 126 with which the input data 120 does not comply with may comprise further information about the kind of observation which has been made or been detected in cases of bad input data 120. Hence, the mentioned further information may, e.g., facilitate remediating persisting problems in the input data 120 and reduce the investigation time.

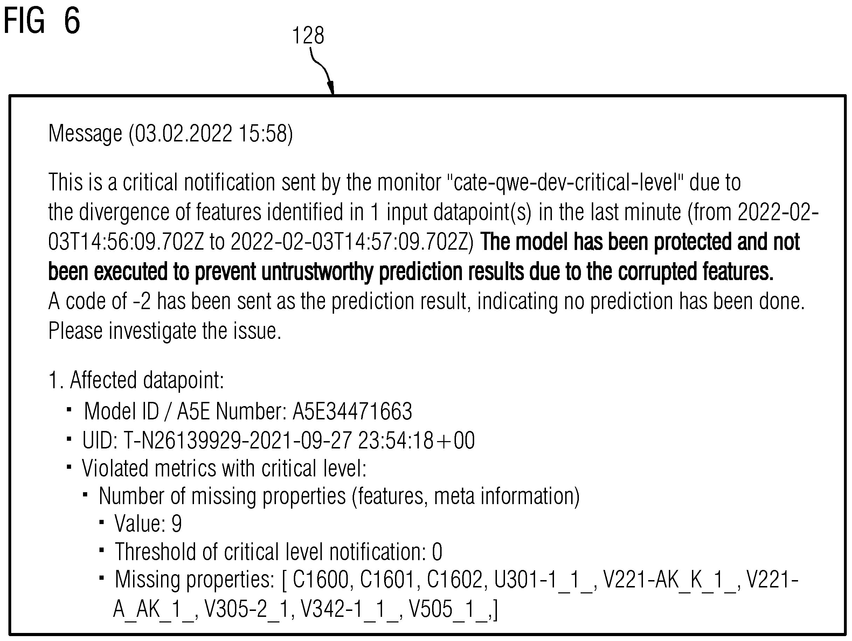

An example message 128 in the context of facilitated analysis of input data of a respective device 140 and/or control of the respective device 140 in a product system is illustrated in Fig. 6. Herein, the example message 128 comprises the statement "The model has been protected and not been executed to prevent untrustworthy prediction results due to the corrupted features." which indicates that the input data 120 does not comply with at least one suitability criterion 126 and that the input data 120 is not provided to the trained function 122 to generate output data 124. The example message 128 of Fig. 6 further comprises the statements
"Violated metrics with critical level:
Number of missing properties (features, meta information)
Value: 9
Threshold of critical level notification: 0
Missing properties: (...) [ C1600, C1601, C1602, U301-1_1_, V221-AK_K_1_ , V221-A_AK_1_, V305-2_ 1, V342-1_1_, V505_1_, ]"
which may, by way of example, indicate that there may be a value of the above-mentioned, expected input data feature number. According to the example message 128, the number of acceptable missing input data features is 0, whereas the actual number of acceptable missing input data feature is 9 (namely the nine features corresponding to the quantities in squared brackets) which causes the noncompliance of the input data 120.

From this example message 128 it may become evident that the respective message 128 may, in some examples, be fairly easy to understand also for non-experts in the field of data science, such as ordinary test engineers or operators of the respective device 140 or a plant comprising the respective device 140. This facilitated understandability and interpretability of the respective message 128 may, e.g., be enabled by enriching the respective message 128 with the information on the respective suitability criterion 126 with which the input data 120 does not comply with. In some examples, the respective message 128 may comprise information on both the respective suitability criterion 126 and how or why the input data 120 does not comply with the respective suitability criterion 126. In further examples, the respective message 128 may comprise the input data 120 which does not comply with the respective suitability criterion 126.

The provision of the generated respective message 128 to the user or the operator of the respective device 140 may, by way of example, be achieved by a displaying the generated message 128 to the user or the operator via the above-mentioned display device 112, wherein in some examples, the generated message 128 may be displayed to the user or the operator on his or her smartphone, laptop, tablet or other mobile device or personal computer. In further examples, the generated respective message 128 may be provided to the user or the operator of the respective device 140 is a voice message.

By way of example, the respective message 128 may be stored in the data store 108 of the computing device 118. Further, in some examples, if there are two or more suitability criteria 126 with which the input data 120 does not comply with, e.g., a given data point of the input data 120 or the input data 120 of a given, preferably short, time interval, there may only be one comprehensive message 128 which may comprise the indication that the input data 120 does not comply with these two or more suitability criteria 126 and which may further comprise information on these two or more suitability criteria 126 with which the input data 120 does not comply with.

In some examples, the respective message 128 may be provided to an IT system, a MOM system, a MES, an ERP system, or a SCADA system which is communicatively connected with the computing device 118 and which, in some examples, may analyze, monitor, operate, control, or manage the respective device 140.

It should be appreciated, that in some examples, the application software component 106 and/or the processor 102 may further be configured to provide an acceptable data drift 130 with respect to the input data 120; to determine a respective updated suitability criterion 126' taking the acceptable drift 130 into account; and to replace the respective suitability criterion 126 with the respective updated suitability criterion 126'.

A data drift 130 may, e.g., be understood as a change of statistical moments of a distribution over time compared to training or historical data. In some examples, the respective device 140 may be subject to wear or aging processes which may be known or expected beforehand, and which may influence the input data 120 which may be related to the respective device 140. In such cases, wear or aging may lead to an expected and acceptable data drift 130 of the input data 120 over time, whereby this acceptable data drift may be taken into account by updating the respective suitability criterion 126 to obtain respective updated suitability criterion 126'. By way of example, the input data 120 or a physical or chemical quantity comprised by the input data 120 may undergo a certain offset after a certain period of time, whereby this data drift 130 may be a linear or more complex function of time. Further, the data drift 130 may not directly depend on the period of time, but rather on a number of times of use of the respective device 140 or of an intensity of a load or stress exerted on the respective device 140. By way of example, the acceptable data drift 130 may offset the above-mentioned input data value boundary, e.g., such that the original input data value boundaries "greater than 1.25" and "smaller than 5.20" may undergo a continuous, linear adaptation of +0.1 per year, hereby defining an initial range of suitable electric currents from 1.25 A to 5.20 A, an updated range of suitable electric currents from 1.35 A to 5.30 A after one year, an further update range of suitable electric currents from 1.45 A to 5.40 A after two year, etc., whereby the range may be adapted continuously for each day, week, month or the like.

The mentioned wear and ageing effects may be used to determine the acceptable data drift 130 which may then be used to determine the respective updated suitability criterion 126'. The respective updated suitability criterion 126' may then replace the respective suitability criterion 126 against which the input data 120 may be checked and compared.

By way of example, the acceptable data drift 130 and/or the respective updated suitability criterion 126' may be stored in the data store 108 of the computing device 118.

In further examples, if the input data 120 is determined to be not suitable for processing with the trained function 122, the application software component 106 and/or the processor 102 may further be configured to provide fallback output data 124' being suitable for analyzing and/or controlling the respective device 140.

In some examples, the respective input data 120 may characterize a machining or production step which is carried out or monitored by the respective device 140 and during which a product which is machined, handled, or produced. If the input data 120 is determined not to be suitable for processing with the trained function 122, the fallback output data 124' may indicate that the quality of this product may not sufficient, that this product may need to be sorted out and/or that further tests to check the product quality may be required. Further, in some examples, the fallback output data 124' may map the input data 120 to some output which is uncritical, e.g., for the production process in which the respective device 140 is involved. In the case of binary predictions, the most conservative fallback may, e.g., be a mapping to the "real error" class of the trained function 122, resulting, e.g., in the above PCB production line, in a manual check of the PCB. Hence, the fallback output data 124' may, in some examples, avoid faulty products in further processing steps.

In some examples, the respective input data 120 may characterize the respective device 140 or a production line comprising the respective device 140. If the input data 120 is determined not to be suitable for processing with the trained function 122, the fallback output data 124' may indicate that the respective device 140 or the mentioned production line may have a malfunction, may need a maintenance or repair, or may need to be shut down.

In further examples, if the input data 120 is determined not to be suitable for processing with the trained function 122, the fallback output data 124' may trigger or be used to trigger a switch of the respective device 140 or a production line comprising the respective device 140 from an operating mode into a safe mode in a functional safety context. Such scenarios may, e.g., be applied if the input data 120 does not comply with the above-mentioned alarm criterion or if environmental, health or safety topics related to the respective device 140 are concerned, such as causing a fire or a potential injury of the production staff.

By way of example, the fallback output data 124' may be determined beforehand and/or be stored in the data store 108 of the computing device 118. In some examples, the fallback output data 124' may be provided to an IT system, a MOM system, a MES, an ERP system, or a SCADA system which is communicatively connected with the computing device 118 and which, in some examples, may analyze, monitor, operate, control, or manage the respective device 140.

In some examples, the application software component 106 and/or the processor 102 may further be configured to assign a first flag 132 to the input data 120 if the input data 120 is determined to be suitable for processing with the trained function 122; and/or to assign a second flag 134 to the input data 120 if the input data 120 is determined to be not suitable for processing with the trained function 122.

By way of example, the first flag 132 and the second flag 134 may be understood as a data quality flag which may be assigned to the respective input data 120. The first flag 132 and the second flag 134 may, e.g., simply indicate that the input data 120 may be "ok" or "not okay", i.e., suitable or not suitable for processing with the trained function 122, respectively. The second flag 134 indicating not suitable input data 120 may, e.g., be used to open an alternative data stream path to bypass the trained function 122. In this case, input data 120 and the second flag 134 may be transmitted, e.g., being comprised by the above-mentioned respective message 128, through this channel to avoid predictions of the trained function 122 on bad data. The second flag 134 and the respective message 128 may, e.g., be provided to a user or an operator of the respective device 140.

Further, the first flag 132 and the second flag 134 may, in some examples, facilitate preserving the information if a particular piece of input data 120 has been determined to be suitable or not suitable for processing with the trained function 122. This preserved information may, e.g., facilitates a later evaluation of the quality or performance of the respective device 140, the production line comprising the respective device 140, or a machining or production step which is carried out or monitored by the respective device 140. In this way, this preserved information may, e.g., facilitate remediation efforts, such as a retraining of the trained function 122 or identifying and executing a potentially required maintenance, repair or replacement of the respective device 140.

By way of example, the first flag 132 and/or the second flag 134 may be determined beforehand and/or be stored in the data store 108 of the computing device 118. In some examples, the first flag 132 and/or the second flag 134 may be provided to an IT system, a MOM system, a MES, an ERP system, or a SCADA system which is communicatively connected with the computing device 118 and which, in some examples, may analyze, monitor, operate, control, or manage the respective device 140.

In some embodiments, the determination if the input data 120 is suitable for processing with the trained function 122 and the processing of the input data 120 with the trained function 122 may be performed by a computation device 118. In further embodiments, the computation device 118 may be arranged in the same communication network as the respective device 140. In another embodiment the computation device 118 may be arranged within a radius of 5 m of the respective device 140. In a further example, the computation device 118 may communicatively be connected with the respective device 140 with a latency of less than 10 ms. It is understood that one or more of these aspects in the context of the computation device 118 may be combined.

In some examples, such a computing device 118 may be understood as an edge device which may be arranged in an industrial environment in the process level, the field level or the control level of an industrial production facility. Further, the respective device 140 may, e.g., also be such an edge device. In further examples, the computation device 118 may have similar computing and memory resources than a state-of-the-art smartphone, e.g., presently (in the year 2022) 4 GB or 8 GB RAM, up to a 4- or 6-core CPU with 2 to 3.5 GHz, and up to 512 GB of memory, whereby these state-of-the-art computing and memory resources are expected to become larger over time. In yet further examples, the computation device 118 may have similar computing and memory resources than a state-of-the-art, but low-cost smartphone, e.g., resources costing or being of the order of 20% to 50% of the above-mentioned RAM, CPU, and memory resources. Hereby, the computing device 118 may, e.g., be embodied by an industrial PC.

In some examples, the computation device 118 and the respective device 140 may be arranged locally or network-wise close to each other, e.g., to allow for communication with each other with a latency of less than 10 ms or the computation device 118 and the respective device 140 may be arranged within a radius of up to 2 m. The computation device 118 and the respective device 140 may, e.g., may be arranged in the same communication network as the respective device 140 which may, e.g., mean that there is no communication gateway arranged between the computation device 118 and the respective device 140.

An accordingly arranged computation device 118 and respective device 140 may facilitate and sometimes enable quick and reliable execution of the determination if the input data 120 suitable for processing with the trained function 122 and of the processing of the input data 120 with the trained function 122. Further, this quick and reliable execution of the two tasks may, e.g., enable so-called inspection in manufacturing, i.e., conducting inspection during the production process which helps to control the quality of products by helping to fix the sources of defects immediately after they are detected, and it is useful for any factory that wants to improve productivity, reduce defect rates, and reduce re-work and waste. In some examples, this quick and reliable execution of the two tasks may, e.g., enable closed-loop manufacturing which is a closed-loop process of manufacturing and measuring or checking in the manufacturing machine, here the respective device 140 or the production plant comprising the respective device 140. Hereby, closed-loop manufacturing may reduce costs and improve the quality and accuracy of the produced parts.

It should be appreciated, that in some examples, the application software component 106 and/or the processor 102 may further be configured to analyze and/or control the respective device 140 using the output data 124 and optionally the fallback output data 124'.

In some examples, the application software component 106 and/or the processor 102 may further be configured to analyze and/or control a manufacturing process of a product using the respective device 140; and to determine if the product quality is sufficient using the output data 124 and optionally the fallback output data 124'.

Herein, the manufacturing process of the product may, e.g., be a discrete manufacturing process of distinct product items. In some examples, the manufacturing process of the product may be a continuous or process manufacturing process which is associated with formulas and manufacturing recipes. Hereby, process manufacturing may sometimes also be referred to as a "process industry" which may be defined as an industry, such as the chemical or petrochemical industry, that is concerned with the processing of bulk resources into other products.

By way of example, the respective device 140 may be any one of a production machine, an automation device, a sensor, a production monitoring device, a vehicle or any combination thereof.

The respective device 140 may, in some examples, may be or comprise a sensor, an actuator, such as an electric motor, a valve or a robot, and inverter supplying an electric motor, a gear box, a programmable logic controller (PLC), a communication gateway, and/or other parts component relating to industrial automation products and industrial automation in general. The respective device 140 may be (part of) a complex production line or production plant, e.g., a bottle filing machine, conveyor, welding machine, welding robot, etc. Further, by way of example, the respective device may be or comprise a manufacturing operation management (MOM) system, a manufacturing execution system (MES), and enterprise resource planning (ERP) system, a supervisory control and data acquisition (SCADA) system, or any combination thereof.

In an industrial embodiment, the suggested method and system may be realized in the context of an industrial production facility, e.g., for producing parts of product devices (e.g., printed circuit boards, semiconductors, electronic components, mechanical components, machines, robots, devices, vehicles or parts of the vehicles, such as cars, motorcycles, airplanes, ships, or the like) or an energy generation or distribution facility (power plant in general, transformers, switch gears, the like). By way of example, the suggested method and system may be applied to certain manufacturing steps during the production of the product device, such as milling, grinding, welding, forming, painting, cutting, etc., e.g., monitoring or even controlling the welding process, e.g., during the production of cars. In particular, the suggested method and system may be applied to one or several plants performing the same task at different locations, whereby the input data 120 may originate from one or several of these plants which may allow for monitoring, operating and/or the controlling of the respective device 140 or plant(s). In further examples, the suggested method and system may be realized in the context of assisted or autonomous driving, e.g., of vehicle, such as cars, motorcycles, airplanes, ships, or the like, wherein the respective device 140 may be or be comprised the vehicle which may be analyzed and/or controlled using the suggested method.

The suggested method and system may, in some examples, have the following advantages in the context of a machine learning pipeline execution, e.g., on an edge IPCs close to the production line: Without the suggested approach, the trained function 122 or the ML model might not be able to execute for bad input data 120. This may cause an exception in the embedding software, which may crash the entire ML application. This in turn may delay the production process, which relies on feedback by the trained function 122 in case of detected failures by the test equipment or the respective device. Using the suggested method and system, these drawbacks can reliably be avoided.

Further, the suggested method and system may help to avoid ML model predictions via the trained model 122 for out-of-domain input data samples. The trained function 122 may be trained on a historical data set with boundaries on numerical data. Generalization of ML model predictions to values outside of the known boundaries may not be determined during model training. Further, labelled data for out-of-boundary data may not available. In the worst case, values outside of the known boundaries may lead to "false negative" predictions with a high ML model confidence. This can directly jeopardize the quality of the produced products by introducing additional quality slip into the production. Using the suggested method and system, also these drawbacks can reliably be avoided.

Further, the suggested method and system may help to reduce the required time to fix problems. Transmitting the above-mentioned messages 128, e.g., the result of the above-mentioned model defender evaluations, directly to the responsible user, test engineer or data scientist can reduce the time to fix occurring problems. By pointing directly towards the type of violation in the input data 120, an underlying upstream problem may be fixed more efficiently. Without the suggested method and system, potentially laborious and time-consuming data tracing and bug investigations may be required to find the cause for missing model predictions. This may, in some examples, be achieved thanks to interpretable output. In this way not only a data scientist, but also a regular user, test engineer or operator may understand the underlying problem. For instance, an incoming datapoint with a missing unique identifier and an outlier feature value would send the following messages (among others) to the consumer which may comparably be easy to understand and interpret:
"CRITICAL: Feature 'meta' violated 'required'.'uid' is a required property",
"NOTICE: Feature 'C721' violated
'lower_outlier _threshold'.1.089 is lower than the lower outlier threshold 1.103. It is an outlier."

Further, by way of example, default alerting and defending thresholds, e.g., for the above-mentioned warning criterion and alarm criterion, may be used which may be based on validation errors on historical data which may be used to derive default alerting and defending thresholds for the individual validation types or suitability criterion 128. Hereby, typically the warning threshold may be less strict than the alarm threshold. Hence, if the number of violations break the warning criterion, but not the alarm threshold, the user already receives warning messages which might help him to prevent a potential interference of the above-mentioned model defender at all.

With reference to Fig. 2, a flow diagram of another methodology of analyzing input data 120 of a respective device 140 is illustrated as already explained above.

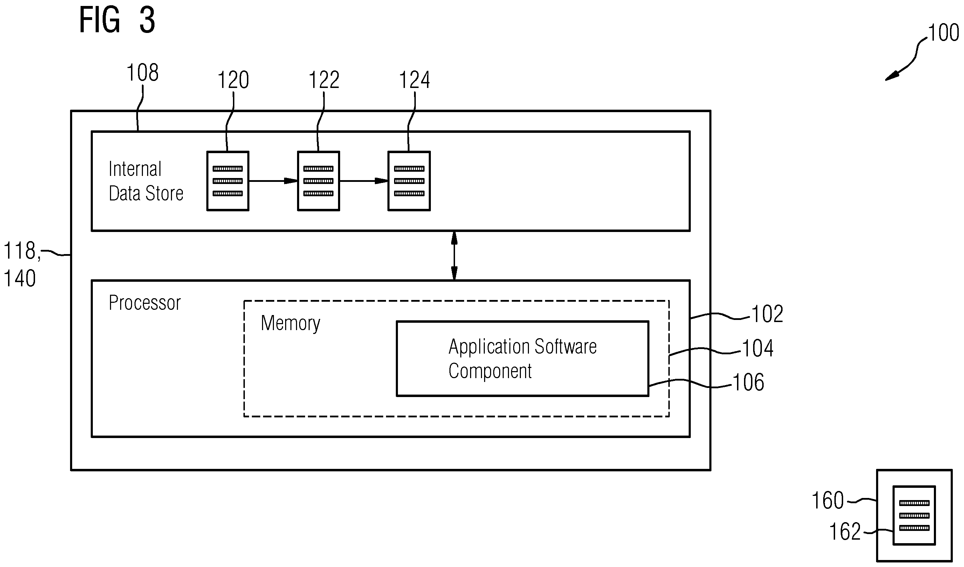

With reference to Fig. 3, a functional block diagram of another example data processing system 100 is illustrated that facilitates analyzing input data 120 of a respective device 140 and/or controlling the respective device 140.

As illustrated in Fig. 3, the computation device 118 may be identical to the respective device 140. Accordingly, the input data 120 originates from the same device which, in some examples, also performs the steps of determining if the input data 120 suitable for processing with the trained function 122 and of processing the input data 120 with the trained function 122 to generate the output data 124 only if the input data 120 is determined to be suitable for the processing with the trained function 122.

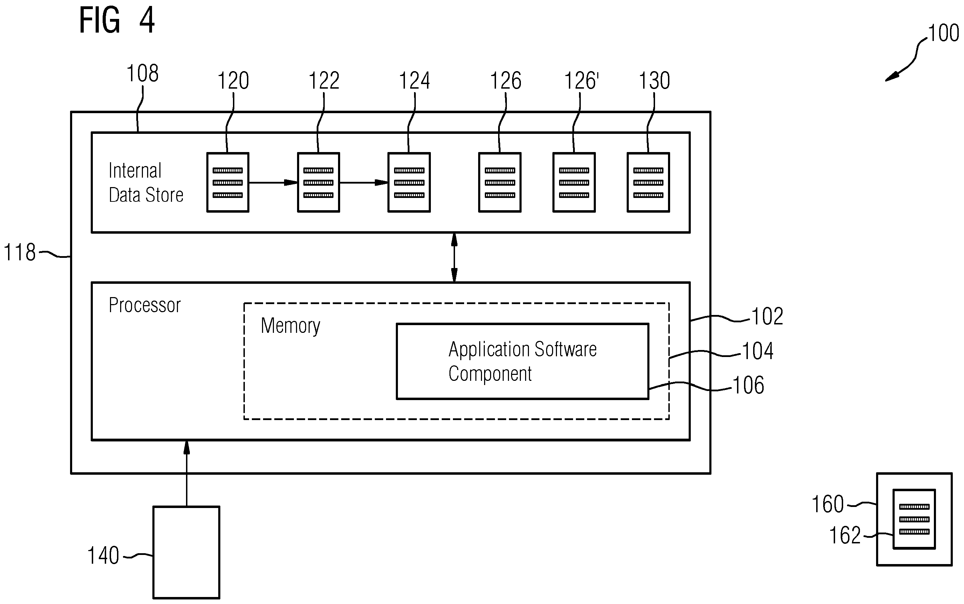

With reference to Fig. 4, a functional block diagram of a further example data processing system 100 is illustrated that facilitates analyzing input data 120 of a respective device 140 and/or controlling the respective device 140.

As illustrated in Fig. 4, a suitability criterion 126 for the input data 120 may be provided and stored in the data store 108, wherein the suitability criterion 126 may comprise at least one of an input data type, an input data precision value, at least one input data value boundary, an input data feature type, an input data feature number, an input data schema type, an input data category, or any combination thereof. The input data 120 may be determined to be suitable or to be not suitable for processing with the trained function 122 if the input data 120 complies or does not comply with the respective suitability criterion 126, respectively.

Further an acceptable data drift 130 with respect to the input data 120 may be provided and stored in the data store 108, whereby an updated suitability criterion 126' may be determined taking the acceptable drift 130 into account. The suitability criterion 126 may then be replaced with the updated suitability criterion 126' which may also be stored in the data store 108.

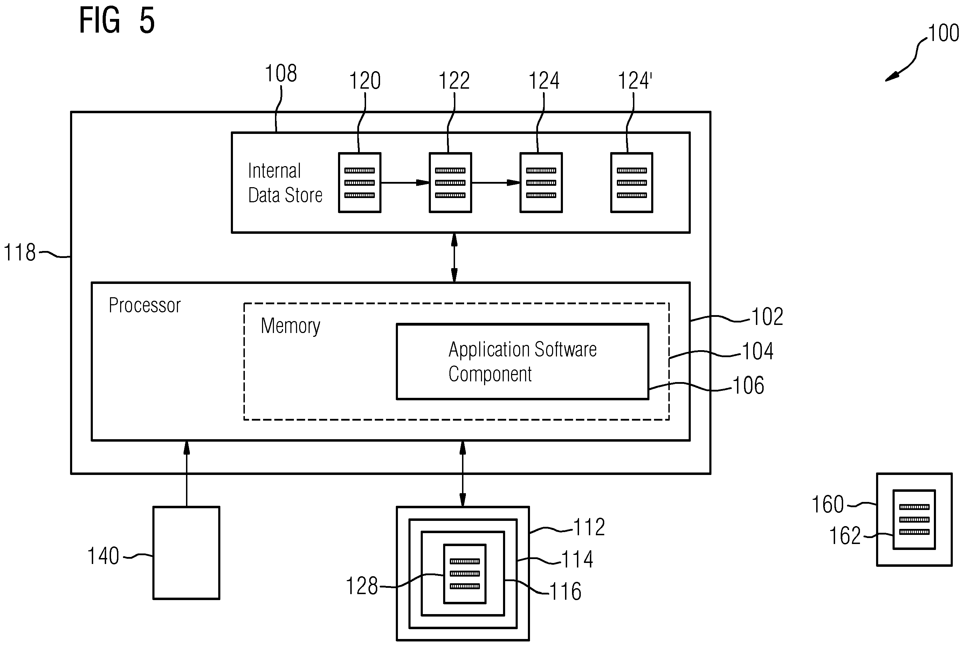

With reference to Fig. 5, a functional block diagram of yet another example data processing system 100 is illustrated that facilitates analyzing input data 120 of a respective device 140 and/or controlling the respective device 140.

As illustrated in Fig. 5, a message 128 may be generated and displayed via the GUI 114 which is displayed on the display device 112. The GUI 114 may comprise an analysis or control UI 116 in which the message 128 may be displayed. An example message 128 is illustrated in Fig. 6 and explained above.

If the input data 120 is determined to be not suitable for processing with the trained function 122, fallback output data 124' may be provided and be stored in the data store 108, whereby the fallback output data 124' may be suitable for analyzing and/or controlling the respective device 140.

With reference to Fig. 6, an example message in the context of facilitated analysis of input data of a respective device and/or control of the respective device is illustrated as already explained above.

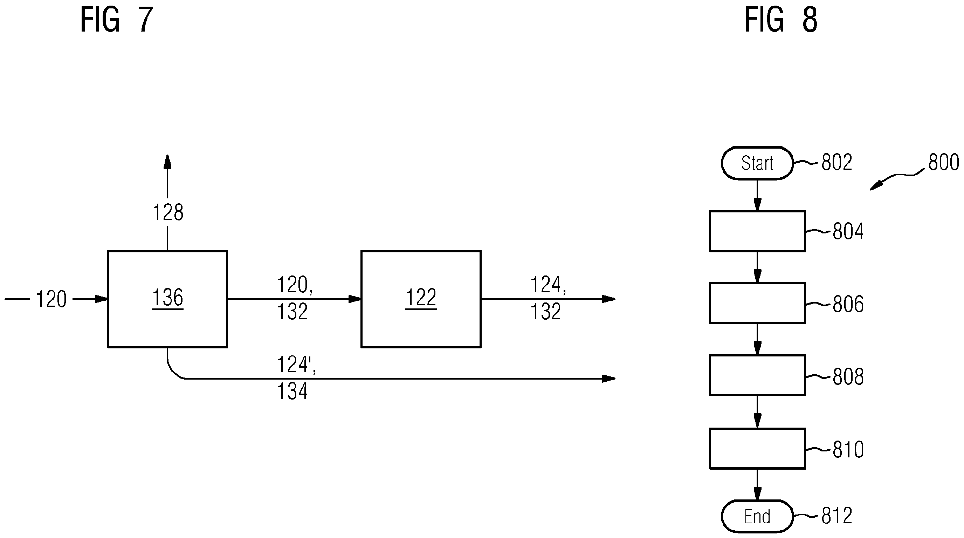

Referring now to Fig. 7, a flow diagram of an example methodology is illustrated that facilitates analyzing input data 120 of a respective device 140 and/or controlling the respective device 140.

As illustrated in Fig. 7, input data 120 may be provided and may be processed to determine if the input data 120 suitable for processing with the trained function 122. This processing and determination step may be done by a model defender module 136 which may only admit suitable input data 120 to the trained function 122.

If the input data 120 does not comply with the suitability criterion 126, a message 128 may be generated and, e.g., be provided to a user or an operator of the respective device 140, e.g., by providing the message 128 to an IT system, a MOM system, a MES, an ERP system, or a SCADA system which is communicatively connected with the computing device 118 and which, in some examples, may analyze, monitor, operate, control, or manage the respective device 140. Hereby the message 128 may indicate that the input data 120 does not comply with the respective suitability criterion 126, whereby the respective message 128 may comprise information on the respective suitability criterion 126 with which the input data 120 does not comply with.

Only if the input data 120 is determined to be suitable for processing with the trained function 122 and, e.g., complies with the suitability criterion 126, the input data 120 is processed with the trained function 122 to generate output data 124.

Further, a first flag 132 or a second flag 134 may be assigned to the input data 120 if the input data 120 is determined to be suitable or to be not suitable for processing with the trained function 122, respectively. The first flag 132 and the second flag 134 may, e.g., be provided to an IT system, a MOM system, a MES, an ERP system, or a SCADA system which is communicatively connected with the computing device 118 and which, in some examples, may analyze, monitor, operate, control, or manage the respective device 140.

If the input data 120 is determined to be not suitable for processing with the trained function 122, fallback output data 124' may be provided which may be suitable for analyzing and/or controlling the respective device 140. The input data 120 of respective device 140 may then be analyzed and/or the respective device 140 may then be controlled using the output data 124 and optionally the fallback output data 124'. Further, a manufacturing process of a product using the respective device 140 may be analyzed and/or controlled, whereby it may be determined if the product quality is sufficient using the output data 124 and optionally the fallback output data 124'.

Referring now to Fig. 8, a flow diagram of another example methodology is illustrated that facilitates analyzing input data of a respective device and/or controlling the respective device. The methodology 800 may start at 802 and may comprise several acts carried out through operation of at least one processor.

These acts may comprise an act 804 of providing input data from the respective device; an act 806 of providing a trained function for processing the input data to generate output data, the output data being suitable for analyzing and/or controlling the respective device; an act 808 of determining if the input data is suitable for processing with the trained function; and an act 810 of processing the input data with the trained function to generate the output data only if the input data is determined to be suitable for processing with the trained function. At 812 the methodology may end.

It should further be appreciated that the methodology 800 may comprise other acts and features discussed previously with respect to the computer-implemented method of analyzing input data of a respective device and/or controlling the respective device.

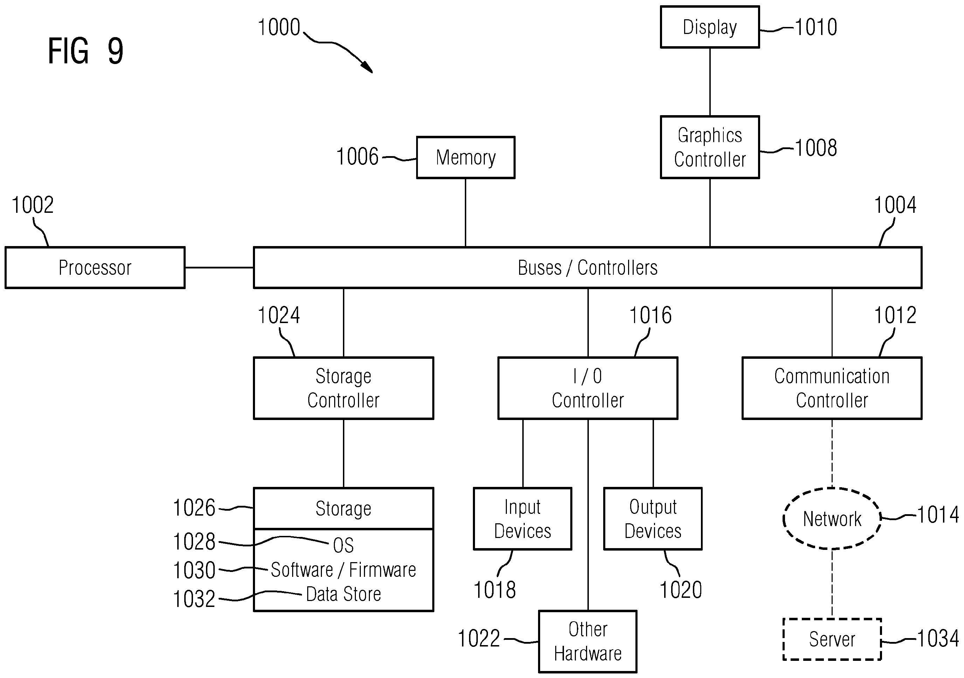

Fig. 9 illustrates a block diagram of a data processing system 1000 (also referred to as a computer system) in which an embodiment can be implemented, for example, as a portion of a product system, and/or other system operatively configured by software or otherwise to perform the processes as described herein. The data processing system 1000 may comprise, for example, the computer or IT system or data processing system 100 mentioned above. The data processing system depicted comprises at least one processor 1002 (e.g., a CPU) that may be connected to one or more bridges/controllers/buses 1004 (e.g., a north bridge, a south bridge). One of the buses 1004, for example, may comprise one or more I/O buses such as a PCI Express bus. Also connected to various buses in the depicted example may comprise a main memory 1006 (RAM) and a graphics controller 1008. The graphics controller 1008 may be connected to one or more display devices 1010. It should also be noted that in some embodiments one or more controllers (e.g., graphics, south bridge) may be integrated with the CPU (on the same chip or die). Examples of CPU architectures comprise IA-32, x86-64, and ARM processor architectures.

Other peripherals connected to one or more buses may comprise communication controllers 1012 (Ethernet controllers, WiFi controllers, cellular controllers) operative to connect to a local area network (LAN), Wide Area Network (WAN), a cellular network, and/or other wired or wireless networks 1014 or communication equipment.

Further components connected to various busses may comprise one or more I/O controllers 1016 such as USB controllers, Bluetooth controllers, and/or dedicated audio controllers (connected to speakers and/or microphones). It should also be appreciated that various peripherals may be connected to the I/O controller(s) (via various ports and connections) comprising input devices 1018 (e.g., keyboard, mouse, pointer, touch screen, touch pad, drawing tablet, trackball, buttons, keypad, game controller, gamepad, camera, microphone, scanners, motion sensing devices that capture motion gestures), output devices 1020 (e.g., printers, speakers) or any other type of device that is operative to provide inputs to or receive outputs from the data processing system. Also, it should be appreciated that many devices referred to as input devices or output devices may both provide inputs and receive outputs of communications with the data processing system. For example, the processor 1002 may be integrated into a housing (such as a tablet) that comprises a touch screen that serves as both an input and display device. Further, it should be appreciated that some input devices (such as a laptop) may comprise a plurality of different types of input devices (e.g., touch screen, touch pad, keyboard). Also, it should be appreciated that other peripheral hardware 1022 connected to the I/O controllers 1016 may comprise any type of device, machine, or component that is configured to communicate with a data processing system.

Additional components connected to various busses may comprise one or more storage controllers 1024 (e.g., SATA). A storage controller may be connected to a storage device 1026 such as one or more storage drives and/or any associated removable media, which can be any suitable non-transitory machine usable or machine-readable storage medium. Examples comprise nonvolatile devices, volatile devices, read only devices, writable devices, ROMs, EPROMs, magnetic tape storage, floppy disk drives, hard disk drives, solid-state drives (SSDs), flash memory, optical disk drives (CDs, DVDs, Blu-ray), and other known optical, electrical, or magnetic storage devices drives and/or computer media. Also, in some examples, a storage device such as an SSD may be connected directly to an I/O bus 1004 such as a PCI Express bus.

A data processing system in accordance with an embodiment of the present disclosure may comprise an operating system 1028, software/firmware 1030, and data stores 1032 (that may be stored on a storage device 1026 and/or the memory 1006). Such an operating system may employ a command line interface (CLI) shell and/or a graphical user interface (GUI) shell. The GUI shell permits multiple display windows to be presented in the graphical user interface simultaneously, with each display window providing an interface to a different application or to a different instance of the same application. A cursor or pointer in the graphical user interface may be manipulated by a user through a pointing device such as a mouse or touch screen. The position of the cursor/pointer may be changed and/or an event, such as clicking a mouse button or touching a touch screen, may be generated to actuate a desired response. Examples of operating systems that may be used in a data processing system may comprise Microsoft Windows, Linux, UNIX, iOS, and Android operating systems. Also, examples of data stores comprise data files, data tables, relational database (e.g., Oracle, Microsoft SQL Server), database servers, or any other structure and/or device that is capable of storing data, which is retrievable by a processor.

The communication controllers 1012 may be connected to the network 1014 (not a part of data processing system 1000), which can be any public or private data processing system network or combination of networks, as known to those of skill in the art, comprising the Internet. Data processing system 1000 can communicate over the network 1014 with one or more other data processing systems such as a server 1034 (also not part of the data processing system 1000). However, an alternative data processing system may correspond to a plurality of data processing systems implemented as part of a distributed system in which processors associated with several data processing systems may be in communication by way of one or more network connections and may collectively perform tasks described as being performed by a single data processing system. Thus, it is to be understood that when referring to a data processing system, such a system may be implemented across several data processing systems organized in a distributed system in communication with each other via a network.

Further, the term "controller" means any device, system, or part thereof that controls at least one operation, whether such a device is implemented in hardware, firmware, software, or some combination of at least two of the same. It should be noted that the functionality associated with any particular controller may be centralized or distributed, whether locally or remotely.

In addition, it should be appreciated that data processing systems may be implemented as virtual machines in a virtual machine architecture or cloud environment. For example, the processor 1002 and associated components may correspond to a virtual machine executing in a virtual machine environment of one or more servers. Examples of virtual machine architectures comprise VMware ESCi, Microsoft Hyper-V, Xen, and KVM.

Those of ordinary skill in the art will appreciate that the hardware depicted for the data processing system may vary for particular implementations. For example, the data processing system 1000 in this example may correspond to a computer, workstation, server, PC, notebook computer, tablet, mobile phone, and/or any other type of apparatus/system that is operative to process data and carry out functionality and features described herein associated with the operation of a data processing system, computer, processor, and/or a controller discussed herein. The depicted example is provided for the purpose of explanation only and is not meant to imply architectural limitations with respect to the present disclosure.

Also, it should be noted that the processor described herein may be located in a server that is remote from the display and input devices described herein. In such an example, the described display device and input device may be comprised in a client device that communicates with the server (and/or a virtual machine executing on the server) through a wired or wireless network (which may comprise the Internet). In some embodiments, such a client device, for example, may execute a remote desktop application or may correspond to a portal device that carries out a remote desktop protocol with the server in order to send inputs from an input device to the server and receive visual information from the server to display through a display device. Examples of such remote desktop protocols comprise Teradici's PCoIP, Microsoft's RDP, and the RFB protocol. In such examples, the processor described herein may correspond to a virtual processor of a virtual machine executing in a physical processor of the server.

As used herein, the terms "component" and "system" are intended to encompass hardware, software, or a combination of hardware and software. Thus, for example, a system or component may be a process, a process executing on a processor, or a processor. Additionally, a component or system may be localized on a single device or distributed across several devices.

Also, as used herein a processor corresponds to any electronic device that is configured via hardware circuits, software, and/or firmware to process data. For example, processors described herein may correspond to one or more (or a combination) of a microprocessor, CPU, FPGA, ASIC, or any other integrated circuit (IC) or other type of circuit that is capable of processing data in a data processing system, which may have the form of a controller board, computer, server, mobile phone, and/or any other type of electronic device.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 1000 may conform to any of the various current implementations and practices known in the art.

Also, it should be understood that the words or phrases used herein should be construed broadly, unless expressly limited in some examples. For example, the terms "comprise" and "comprise," as well as derivatives thereof, mean inclusion without limitation. The singular forms "a", "an" and "the" are intended to comprise the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to comprise, be comprised within, interconnect with, contain, be contained within, connect to or with, couple to or with, be communicable with, cooperate with, interleave, juxtapose, be proximate to, be bound to or with, have, have a property of, or the like.

Also, although the terms "first", "second", "third" and so forth may be used herein to describe various elements, functions, or acts, these elements, functions, or acts should not be limited by these terms. Rather these numeral adjectives are used to distinguish different elements, functions or acts from each other. For example, a first element, function, or act could be termed a second element, function, or act, and, similarly, a second element, function, or act could be termed a first element, function, or act, without departing from the scope of the present disclosure.

In addition, phrases such as "processor is configured to" carry out one or more functions or processes, may mean the processor is operatively configured to or operably configured to carry out the functions or processes via software, firmware, and/or wired circuits. For example, a processor that is configured to carry out a function/process may correspond to a processor that is executing the software/firmware, which is programmed to cause the processor to carry out the function/process and/or may correspond to a processor that has the software/firmware in a memory or storage device that is available to be executed by the processor to carry out the function/process. It should also be noted that a processor that is "configured to" carry out one or more functions or processes, may also correspond to a processor circuit particularly fabricated or "wired" to carry out the functions or processes (e.g., an ASIC or FPGA design). Further the phrase "at least one" before an element (e.g., a processor) that is configured to carry out more than one function may correspond to one or more elements (e.g., processors) that each carry out the functions and may also correspond to two or more of the elements (e.g., processors) that respectively carry out different ones of the one or more different functions.

In addition, the term "adjacent to" may mean that an element is relatively near to but not in contact with a further element; or that the element is in contact with the further portion, unless the context clearly indicates otherwise.

## Claims

1. Computer-implemented method of analyzing input data (120) of a respective device (140) and/or controlling the respective device (140), the method comprising:
- providing input data (120) from the respective device (140) ;
- providing a trained function (122) for processing the input data (120) to generate output data (124), the output data (124) being suitable for analyzing and/or controlling the respective device (140);
- determining if the input data (120) is suitable for processing with the trained function (122); and
- processing the input data (120) with the trained function (122) to generate the output data (124) only if the input data (120) is determined to be suitable for processing with the trained function (122).

2. Computer-implemented method according to claim 1, further comprising:
- providing at least one suitability criterion (126) for the input data (120), the respective suitability criterion (126) comprising at least one of an input data type, an input data precision value, at least one input data value boundary, an input data feature type, an input data feature number, an input data schema type, an input data category, or any combination thereof;
- determining the input data (120) to be not suitable for processing with the trained function (122) if the input data (120) does not comply with the respective suitability criterion (126) and/or
determining the input data (120) to be suitable for processing with the trained function (122) if the input data (120) complies with the respective suitability criterion (126).

3. Computer-implemented method according to claim 2, wherein the at least one suitability criterion (126) comprises a warning criterion and an alarm criterion,
the method further comprising:
- determining the input data (120) to be not suitable for processing with the trained function (122) if the input data (120) does not comply with the alarm criterion; and
- determining the input data (120) to be suitable for processing with the trained function (122) if the input data (120) does not comply with the warning criterion and if the input data (120) complies with the alarm criterion.

4. Computer-implemented method according to claim 2 or 3, further comprising, if the input data (120) does not comply with the respective suitability criterion (126):
- providing at least one curable noncompliance item relating to the respective suitability criterion (126); and
- amending the input data (120) such that the input data (120) complies with the respective suitability criterion (126), if the input data (120) does not comply with the respective curable noncompliance item relating to the respective suitability criterion (126).

5. Computer-implemented method according to any of claims 2 to 4, further comprising, if the input data (120) does not comply with the respective suitability criterion (126):
- generating a respective message (128) indicating that the input data (120) does not comply with the respective suitability criterion (126), the respective message (128) comprising information on the respective suitability criterion (126) with which the input data (120) does not comply with; and
- providing the generated respective message (128) to a user or an operator of the respective device (140).

6. Computer-implemented method according to any of claims 2 to 5, further comprising:
- providing an acceptable data drift (130) with respect to the input data (120);
- determining a respective updated suitability criterion (126') taking the acceptable drift (130) into account; and
- replacing the respective suitability criterion (126) with the respective updated suitability criterion (126' ) .

7. Computer-implemented method according to any of the preceding claims, further comprising, if the input data (120) is determined to be not suitable for processing with the trained function (122):
- providing fallback output data (124') being suitable for analyzing and/or controlling the respective device (140) .

8. Computer-implemented method according to any of the preceding claims, further comprising:
- assigning a first flag (132) to the input data (120) if the input data (120) is determined to be suitable for processing with the trained function (122); and/or
- assigning a second flag (134) to the input data (120) if the input data (120) is determined to be not suitable for processing with the trained function (122).

9. Computer-implemented method according to any of the preceding claims,
wherein the determination if the input data (120) is suitable for processing with the trained function (122) and the processing of the input data (120) with the trained function (122) is performed by a computation device (118),
wherein the computation device (118) is arranged in the same communication network as the respective device (140), and/or wherein the computation device (118) is arranged within a radius of 5 m of the respective device (140), and/or wherein the computation device (118) is communicatively connected with the respective device (140) with a latency of less than 10 ms.

10. Computer-implemented method according to any of the preceding claims, further comprising:
- analyzing and/or controlling the respective device (140) using the output data (124) and optionally the fallback output data (124').

11. Computer-implemented method according to any of the preceding claims, further comprising:
- analyzing and/or controlling a manufacturing process of a product using the respective device (140); and
- determining if the product quality is sufficient using the output data (124) and optionally the fallback output data (124').

12. Computer-implemented method according to any of the preceding claims,
wherein the respective device (140) is any one of a production machine, an automation device, a sensor, a production monitoring device, a vehicle or any combination thereof.

13. Computation device (118) arranged and configured to execute the steps of the computer-implemented method according to any one of the preceding claims.

14. A computer program product (162), comprising computer program code which, when executed by the computation device (118) according to claim 13, causes the computation device (118) to carry out the method of one of the claims 1 to 12.

15. A computer-readable medium (160) comprising the computer program product (162) according to claim 14.
